# FASCICULE DE BREVET EUROPEEN

(11) **EP 2 414 089 B1**
(45) Date de publication et mention de la délivrance du brevet: **31.12.2014**
(21) Numéro de dépôt: 10716379.2
(22) Date de dépôt: 11.03.2010
(51) Int. Cl.: B01D 71/60, B01D 71/80, B01D 67/00, C08G 73/04, H01M 8/10

(54) **MEMBRANE POLYMERE DYNAMIQUE AUTOSUPPORTEE, PROCEDE DE PREPARATION ET UTILISATIONS**
SELBSTTRAGENDE DYNAMISCHE POLYMERMEMBRAN, HERSTELLUNGSVERFAHREN UND VERWENDUNGEN
SELF-SUPPORTING DYNAMIC POLYMER MEMBRANE, METHOD OF PREPARATION, AND USES

(30) Priorité: 30.03.2009 FR 0901540
(43) Date de publication de la demande: 08.02.2012
(73) Titulaire: Centre National de la Recherche Scientifique, 75016 Paris (FR)
(72) Inventeur: NASR, Gihane, F-34000 Montpellier (FR); BARBOIU, Mihail-Dumitru, F-34080 Montpellier (FR); CHARMETTE, Christophe, F-34570 Murviel les Montpellier (FR); SANCHEZ MARCANO, José, Gregorio, F-34160 Sussargues (FR)
(74) Mandataire: Goulard, Sophie
(86) Numéro de dépôt international: PCT/FR2010/050421
(87) Numéro de publication internationale: WO 2010/112721

(56) Documents cités:
- WO-A-02/22245
- WO-A-2004/003044
- SANCHEZ J ET AL: "Poly(ethylene oxide-co-epichlorohydrin) membranes for carbon dioxide separation" JOURNAL OF MEMBRANE SCIENCE, ELSEVIER SCIENTIFIC PUBL.COMPANY. AMSTERDAM, NL, vol. 205, no. 1-2, 1 août 2002 (2002-08-01), pages 259-263, XP004368732 ISSN: 0376-7388 cité dans la demande
- NASR G ET AL: "Dynamic polymer membranes displaying tunable transport properties on constitutional exchange" JOURNAL OF MEMBRANE SCIENCE, ELSEVIER SCIENTIFIC PUBL.COMPANY. AMSTERDAM, NL, vol. 321, no. 1, 1 août 2008 (2008-08-01), pages 8-14, XP022808130 ISSN: 0376-7388 [extrait le 2008-03-13]
- STERN S A: "POLYMERS FOR GAS SEPARATIONS: THE NEXT DECADE" JOURNAL OF MEMBRANE SCIENCE, ELSEVIER SCIENTIFIC PUBL.COMPANY. AMSTERDAM, NL, vol. 94, no. 1/03, 19 septembre 1994 (1994-09-19), pages 1-65, XP000488182 ISSN: 0376-7388 cité dans la demande

## Description

La présente invention est relative à des membranes polymères dynamiques (membranes « dynamères ») autosupportées de type polyimine, à leur procédé de préparation et à leur utilisation dans des procédés de séparation, notamment d'espèces gazeuses.

Il existe différents types de procédés de séparation d'espèces chimiques tels que la cryogénie, la distillation, l'absorption par solvant (chimique ou physique), l'adsorption et la séparation membranaire.

Dans le domaine de la séparation des espèces gazeuses, en particulier du traitement des gaz naturels ou de synthèse, la séparation et la purification des composants sont indispensables pour répondre aux besoins croissants des utilisateurs. Ainsi, le gaz naturel brut et les composants dérivés doivent être débarrassés, entre autre, du dioxyde de carbone contenu par une opération dite de désacidification.

Parmi les différents procédés de séparation connus de l'art antérieur, la séparation membranaire est la moins consommatrice en énergie et figure parmi les procédés les plus utilisés au niveau industriel.

Parmi les procédés membranaires on distingue :
- les procédés utilisant des membranes inorganiques microporeuses essentiellement composées d'alumine, de silice, de zéolithes ou de carbone. Ces procédés sont efficaces, tolèrent des flux moyens ainsi que des températures et des pressions élevées mais ils sont onéreux. De plus les facteurs de sélectivité des membranes inorganiques vis-à-vis des espèces chimiques à séparer restent modestes.
- les procédés utilisant des membranes polymères sont moins coûteux en matière première et en énergie. Cependant les membranes utilisées se dégradent rapidement. L'élaboration de membranes organiques et leurs utilisations pour la séparation gazeuse ont été envisagées à partir de polymères de structures très variées. La majorité des procédés utilisés industriellement mettent en oeuvre des membranes fabriquées en polymères vitreux tels que par exemple les polyimides, les polysulfones et les polyphénylènes oxydes car elles possèdent généralement une plus grande sélectivité et de meilleures propriétés mécaniques mais en contrepartie elles acceptent un flux de séparation plus faible que les membranes inorganiques car elles ont une perméabilité insuffisante. D'autres polymères comme les élastomères tels que les polysiloxanes par exemple ont aussi été utilisés. Ils ont une perméabilité supérieure à celle des membranes fabriquées à partir de polymères vitreux mais ils sont moins sélectifs vis-à-vis des espèces gazeuses à séparer (A. Stern, J. of Membr. Sci., 1994, 94 ; S. T. Hwang et al., Séparation Science, 1974, 9(6)). De manière générale, il a été constaté qu'il existe une relation inverse entre sélectivité et perméabilité : meilleure est la sélectivité, plus faible est la perméabilité. Ainsi, même si les procédés membranaires représentent une évolution par rapport aux procédés plus classiques, ils ont encore besoin d'être améliorés notamment parce que les membranes utilisées restent chères et qu'il est souvent nécessaire de faire un choix entre un flux important (perméabilité élevée) et une sélectivité élevée.

La sélectivité des membranes polymères utilisées vis-à-vis des espèces chimiques à séparer n'est par ailleurs pas modulable sauf si l'on agit sur la nature chimique et/ou la teneur des monomères les constituant. Il a ainsi déjà été proposé, notamment dans la demande de brevet EP 1 322 409 des membranes pour la séparation sélective de gaz, constituées par un copolymère d'oxyde d'éthylène (OE) et d'épichlorhydrine (EP), une partie des unités oxyde d'éthylène pouvant être remplacée par des unités oxyde de propylène (OP). Ces membranes sont en particulier utiles pour la séparation sélective du dioxyde de carbone (CO₂) contenu dans un mélange gazeux. La meilleure sélectivité au CO₂ est obtenue avec une membrane constituée d'unités OE/EP/OP en proportions 85/2/13 (% molaires). L'article de Sanchez J. et al. (Membrane Science, 2002, 205, 259-263) relate une étude de la perméabilité de films autosupportés obtenus à partir de copolymères de poly(oxyde d'éthylène) (POE) et d'épichlorhydrine réticulés. Il y est indiqué qu'il est possible de faire varier les propriétés de perméabilité au CO₂ en faisant varier le rapport POE/épichlorhydrine (POE/EP). Les meilleurs résultats sont obtenus avec les copolymères renfermant entre 87 et 96 % de motifs oxyde d'éthylène, la perméabilité maximale au CO₂ étant obtenue avec une teneur de 93 %.

Il existe donc un besoin pour des membranes polymères pouvant être fabriquées selon un procédé simple et peu coûteux et offrant à la fois une sélectivité élevée par rapport aux espèces que l'on souhaite séparer tout en conservant la possibilité de travailler avec des flux acceptables.

Il est également souhaitable de pouvoir disposer de membranes polymères dont la sélectivité peut être modulée de façon simple sans avoir à faire varier la nature chimique et/ou la teneur des monomères les constituant.

Le but de la présente invention est donc de pourvoir à des membranes polymères organiques ayant à la fois une sélectivité élevée par rapport aux espèces chimiques à séparer et pouvant être modulée facilement, tout en ayant une bonne perméabilité, lesdites membranes pouvant être préparées selon un procédé simple et peu coûteux.

La présente invention a pour objet une membrane polymère auto-supportée, caractérisée en ce qu'elle est constituée par un polymère dynamique formé d'unités récurrentes de formule (I) suivante : 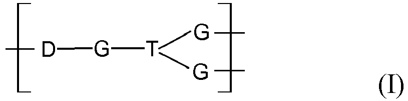 dans laquelle :
- **D** représente une sous-unité de formule (I_{D}) suivante : 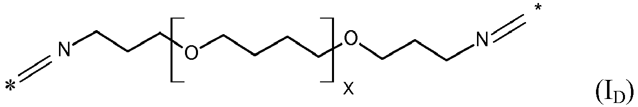 dans laquelle :
   ▪ x est un nombre entier qui varie de 10 à 20 ; et
   ▪ * est le point d'attachement de D à G par l'intermédiaire d'une liaison imine;
- **G** représente une sous-unité de formule (I_{G}) suivante : 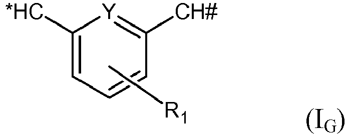 dans laquelle :
   ▪ R₁ représente un atome d'hydrogène ou un radical alkyle ayant de 1 à 4 atomes de carbone,
   ▪ Y représente un atome d'azote ou C-R₂ avec R₂ = H ou OH ;
   ▪ # est le point d'attachement de G à T par l'intermédiaire d'une liaison imine réversible ;
- T représente une sous-unité de formule (I_{T}) suivante : 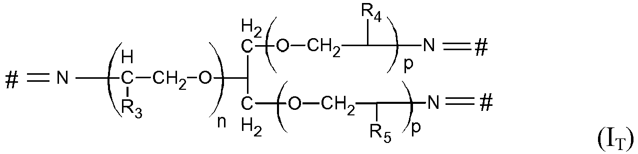 dans laquelle :
   ▪ R₃ représente un atome d'hydrogène ou un radical alkyle ayant de 1 à 6 atomes de carbone,
   ▪ R₄ et R₅, identiques ou différents, représentent un atome d'hydrogène ou un radical alkyle ayant de 1 à 6 atomes de carbone,
   ▪ n est un nombre entier qui varie de 1 à 20,
   ▪ p est un nombre entier qui varie de 1 à 20,
   ▪ # représente le point d'attachement de T à G ;
étant entendu que lesdites sous-unités T représentent de 20 à 45 % en mole par rapport au nombre de moles de sous-unités G constituant ledit polymère.

Le polymère dynamique défini par l'enchainement des unités de formule (I) ci-dessus présente ainsi une structure dendritique du fait que chacune des sous-unités T est reliée à 3 sous-unités G.

Ces membranes ont de bonnes propriétés élastiques et une stabilité thermique élevée (environ 280C°). Elles présentent également une perméabilité améliorée au CO₂. Par ailleurs, les liaisons imine, qui sont par nature des liaisons réversibles, confèrent aux membranes des propriétés de réarrangement, d'auto-répartition et de sélectivité (d'où la qualification de « polymère dynamique »), ce qui favorise leur recyclage et donc la protection de l'environnement.

Parmi les radicaux alkyle mentionnés pour le radical R₁ de la sous-unité de formule (I_{G}), on peut citer les radicaux méthyle, éthyle, n-propyle, n-butyle et *t-*butyle. Selon une forme de réalisation préférée de l'invention, R₁ représente un radical t-butyle, et encore plus préférentiellement un radical t-butyle en position para par rapport à Y.

Selon une forme de réalisation préférée de l'invention, les sous-unités (I_{G}), sont choisies parmi les sous-unités (I_{G1}) à (I_{G3}) suivantes : 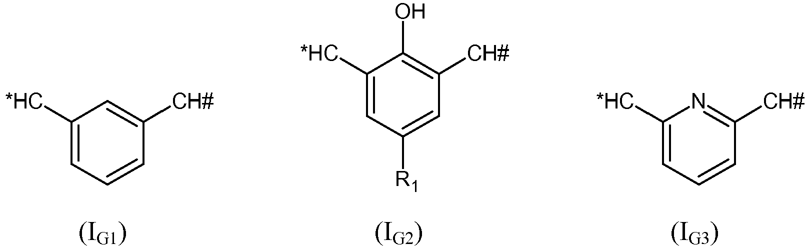 étant entendu que dans la sous-unité de formule (I_{G2}) ci-dessus, le radical R₁ a les mêmes significations que celles indiquées ci-dessus pour la sous-unité (I_{G}). Selon une forme de réalisation particulièrement préférée de l'invention, R₁ représente un radical *t*-butyle.

Les sous-unités de formules (I_{G2}) et (I_{G3}) présentent la particularité d'être capables de former des complexes avec les métaux de transition qui se lient réversiblement aux espèces à séparer et facilitent leur passage à travers la membrane.

Ainsi, selon une forme de réalisation particulière de l'invention, la membrane polymère est constituée par un polymère formé d'unités récurrentes de formule (I) dans laquelle la sous-unité (I_{G}) est une sous-unité (I_{G2}) ou (I_{G3}) complexant au moins un ion métallique de transition, de préférence choisi parmi Ag(I), Cu(I), Co(II), Fe(II), et Zn(II).

La sélectivité de la membrane vis-à-vis d'une espèce donnée peut ainsi être modulée en faisant varier la nature du métal de transition utilisé (séparation des oléfines/paraffines avec Ag(I) ou Cu(I), séparation de N₂ par rapport à O₂ avec Co(II), séparation de CO₂ avec Co(II), Zn(II) ou Fe(II), etc...).

Les membranes intégrant ce type de sous-unités présentent par ailleurs des propriétés de perméabilité et de solubilité améliorées vis-à-vis de certaines espèces gazeuses telles que le CO₂.

Parmi les radicaux alkyle mentionnés pour les radicaux R₃, R₄ et R₅ de la sous-unité de formule (I_{T}) ci-dessus on peut citer les radicaux méthyle, méthyle, n-propyle, n-butyle, n-pentyle et n-hexyle. Parmi ces radicaux alkyle, le radical méthyle est préféré.

Selon une forme de réalisation préférée de l'invention, la sous-unité T est choisie parmi les sous-unités de formule (I_{T}) dans lesquelles R₄ et R₅ sont identiques et représentent un radical méthyle.

A titre de sous-unité T, on préfère tout particulièrement une sous-unité de formule (I_{T}) dans laquelle les radicaux R₃, R₄ et R₅ sont identiques et représentent un radical méthyle et n = p.

Selon une forme de réalisation préférée de l'invention, les sous-unités T représentent de 30 à 38 % en mole environ, et encore plus préférentiellement 34 % environ par rapport au nombre de mole de sous-unités G constituant ledit copolymère.

La membrane autosupportée conforme à la présente invention peut avoir une épaisseur variant de 300 à 600 µm environ et de préférence de 200 à 400 µm environ.

La membrane autosupportée peut être élaborée par polycondensation des précurseurs des sous-unités D, G et T en milieu solvant organique au reflux, et en utilisant les différents précurseurs de chacune des sous-unités D, G et T en des proportions respectives telles que le polymère comprenne de 20 à 45 % en moles de sous-unités T par rapport au nombre de mole de sous-unités G.

La présente invention a donc également pour objet un procédé de préparation d'une membrane polymère autosupportée constituée par un polymère dynamique formé d'unités récurrentes de formule (I) telle que définie précédemment, caractérisé en ce qu'il comprend les étapes suivantes :
a) la préparation d'un mélange réactionnel comprenant, en solution dans au moins un solvant organique :
   - au moins un précurseur d'une sous-unité D choisi parmi les précurseurs de formule (I'_{D}) suivante : 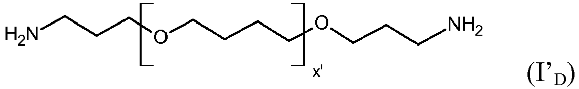 dans laquelle x' est un nombre entier qui varie de 10 à 20 ;
   - au moins un précurseur d'une sous-unité G choisi parmi les précurseurs de formule (I'_{G}) suivante : 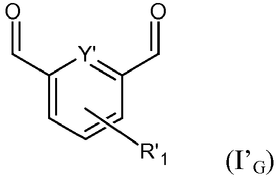 dans laquelle Y' représente un atome d'azote ou C-R'₂ avec R'₂ = H ou OH et R'₁ représente un atome d'hydrogène ou un radical alkyle ayant de 1 à 4 atomes de carbone ; et
   - au moins un précurseur d'une sous-unité T choisi parmi les précurseurs de formule (I'_{T}) suivante : 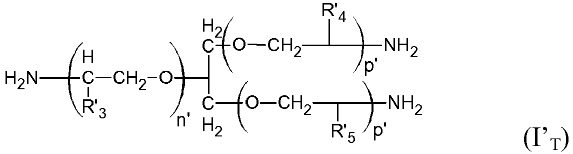 dans laquelle :
      ▪ R'₃ représente un atome d'hydrogène ou un radical alkyle ayant de 1 à 6 atomes de carbone,
      ▪ R'₄ et R'₅, identiques ou différents, représentent un atome d'hydrogène ou un radical alkyle ayant de 1 à 6 atomes de carbone,
      ▪ n' est un nombre entier qui varie de 1 à 20,
      ▪ p' est un nombre entier qui varie de 1 à 20,
   étant entendu qu'au sein dudit mélange réactionnel, la quantité de précurseurs de formule (I'_{T}) représente de 20 à 45 % en mole par rapport au nombre de moles de précurseurs de formule (I'_{G}) présents au sein dudit mélange réactionnel ;
b) la polycondensation desdits précurseurs par chauffage du mélange réactionnel au reflux pour obtenir un polymère dynamique formé d'unités récurrentes de formule (I) telle que définie précédemment ;
c) la mise en forme de la membrane et l'évaporation du solvant organique.

Le solvant organique du mélange réactionnel est de préférence choisi parmi le tetralrydrofurane (THF), le chloroforme, le dichlorométhane, et leurs mélanges.

Selon une forme de réalisation préférée de ce procédé, le ou les solvants utilisés le sont sous forme anhydre.

Selon une forme de réalisation particulière de ce procédé, le précurseur des sous-unités G est choisi parmi les précurseurs de formules (I'G₂) et (I'_{G3}) suivantes : 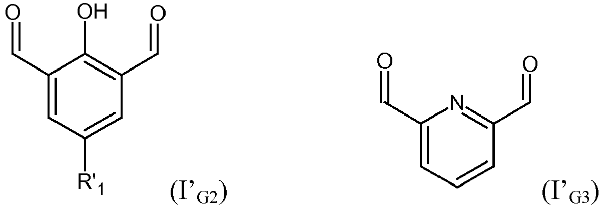 dans laquelle R'₁ a la même signification que celle indiquée ci-dessus pour la sous-unité (I'_{G}). Selon une forme de réalisation particulièrement préférée de l'invention, R'₁ représente un radical t-butyle.

Dans ce cas, le mélange réactionnel préparé lors de l'étape a) renferme alors en outre de préférence au moins un sel d'un métal de transition, de façon à ce que l'ion métallique de transition soit complexé par les précurseurs de formules (I'_{G2}) ou (I'_{G3}) lors de l'étape b) de polycondensation.

Selon cette forme de réalisation, le sel d'un métal de transition peut en particulier être choisi parmi les sels d'argent (Ag⁺), de cuivre (Cu⁺), de cobalt (Co²⁺), de fer (Fe²⁺) et de zinc (Zn²⁺) dans lesquels l'anion est de préférence un acétate, un trifluorométhanesulfonate, un tetrafluoroborate, un hexafluorophosphate, un nitrate, ou un perchlorate.

Lorsqu'ils sont utilisés, ces sels représentent de préférence de 0,25 à 2 moles par mole de sous-unités G.

Lors de l'étape b), la polycondensation des précurseurs des différentes sous-unités est réalisée au reflux, pendant une durée pouvant varier de 12 à 24 heures environ.

Lorsque la polycondensation est terminée, la mise en forme des membranes peut être réalisée par exemple par coulage du milieu réactionnel dans un moule ayant une forme correspondant à la forme de la membrane que l'on souhaite obtenir, ou par enduction sur un support approprié.

Selon une forme de réalisation préférée de ce procédé, lors de l'étape c), une partie du ou des solvants organiques du milieu réactionnel est évaporée avant la mise en forme de la membrane.

Ce procédé est simple, reproductible et peu coûteux à mettre en oeuvre et conduit à l'obtention du polymère avec un rendement de 100%. Il est écologique dans la mesure où il ne nécessite pas de grosses dépenses énergétiques et ne génère que de l'eau en petite quantité comme sous-produit de la réaction de polycondensation.

Les membranes auto-supportées de l'invention peuvent être utilisées dans des procédés de séparation par membranes, en particulier dans des procédés de pervaporation, d'osmose inverse, de nanofiltration et de séparation gazeuse.

Les membranes de l'invention sont particulièrement efficaces pour la séparation sélective de mélanges gazeux. Les membranes dans lesquelles le polymère comprend des sous-unités de formules (I_{G2}) et (I_{G3}) complexées à un métal de transition présentent en particulier une sélectivité et une perméabilité améliorées vis à vis de certaines espèces gazeuses telles que le CO₂. C'est pourquoi les membranes de l'invention, en particulier celles qui sont élaborées avec un polymère comprenant des sous-unités de formules (I_{G2}) et (I_{G3}) complexées à du zinc, présentent un grand intérêt dans divers domaines de l'industrie mettant en jeu du dioxyde de carbone.

Ainsi l'invention a également pour objet, l'utilisation d'une membrane auto-supportée telle que définie précédemment, pour la séparation sélective d'espèces chimiques, en particulier pour la séparation sélective d'espèces gazeuses contenues dans les gaz naturels ou industriels telles que le dioxyde de carbone.

Un autre objet de l'invention est donc un procédé de séparation d'une espèce chimique, et en particulier d'une espèce gazeuse telle que le dioxyde de carbone, consistant à faire passer un mélange gazeux ou liquide contenant l'espèce que l'on souhaite séparer à travers une membrane polymère auto-supportée conforme à l'invention et telle que décrite précédemment.

Les membranes conformes à l'invention peuvent également être utilisées comme électrolyte polymère pour les cellules solaires et les piles à combustible.

La présente invention est illustrée par les exemples de réalisation suivants, auxquels elle n'est cependant pas limitée.

### EXEMPLES

La structure des membranes préparées dans les exemples qui suivent a été étudiée par calorimétrie différentielle à balayage à l'aide d'un calorimètre vendu sous la dénomination commerciale TA Instruments 2920 Modulated DSC par la société Perkin Elmer.

Des analyses en spectroscopie infrarouge (IR) ont également été réalisées à l'aide d'un spectromètre commercialisé sous la dénomination Nicolet Nexus FTIR/ATR Diamant par la société ThermoFischer.

La détermination des coefficients de perméabilité et de diffusion des différentes membranes a été effectuée par la méthode du temps de retard ou « time-lag » en utilisant un perméamètre frontal constitué de deux cellules de perméation séparées par la membrane à tester. La membrane et les deux compartiments ont tout d'abord été dégazés sous vide secondaire pendant au moins 48 heures, à l'aide d'une pompe turbo moléculaire ayant un débit de 50 1.s⁻¹, vendue sous la dénomination commerciale Turbovac 50 par la société Leybold. Les deux compartiments ont ensuite été isolés puis on a introduit le gaz à étudier dans le compartiment situé en amont de la membrane, à une pression de 3,0.10⁵ Pa, cette pression étant plus élevée que la pression mesurée dans le compartiment situé en aval de la membrane. On a enregistré la montée en pression dans le compartiment en aval de la membrane en utilisant un transmetteur de pression vendu sous la dénomination commerciale Baratron par la société MKS Instruments. Cette méthode est basée sur la mesure à volume constant et pression variable. La courbe obtenue permet de déterminer, par la résolution de la deuxième loi de Fick, le coefficient de diffusion lors du régime transitoire et le coefficient de perméabilité quand le régime pseudo stationnaire est atteint.

Les coefficients de solubilité (S) des différentes membranes ont été déterminés à l'aide d'une électrobalance modèle CAHN-1000 dont le fonctionnement est basé sur le principe de gravimétrie, vendue par la société Cahn (USA).

### Exemple 1

### 1) Synthèse de différentes membranes constituées de polymères de formule (I) et de membranes comparatives ne faisant pas partie de l'invention

Les membranes ont été obtenues par polycondensation des sous-unités D, G et T, à partir des précurseurs suivants :
- poly(tetrahydrofuran) bis(3-aminopropyl) : 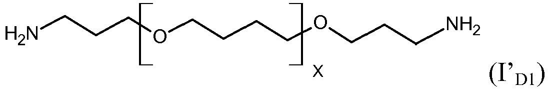 dans laquelle x est tel que le précurseur de formule (I'_{D1}) à une masse moléculaire d'environ 1100 g/mol ;
- isophthalaldéhyde (précurseur de la sous-unité G) : 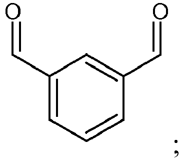
- glycérol tris[poly(propylène glycol) éther à amines terminales : 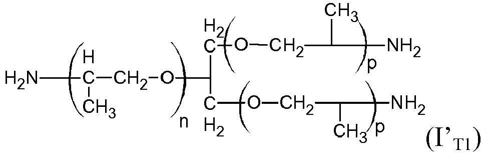
dans laquelle n = p = 17 environ de telle sorte que ledit précurseur de formule ait une masse moléculaire d'environ 3000 g/mol.

Différentes membranes comportant de 0 à 100 % en moles de sous-unités T par rapport au nombre de moles de sous-unités G (soit t %) ont été synthétisées, les quantités de chacun des précurseurs à utiliser étant calculées en fonction du pourcentage t de sous-unité T que l'on souhaite obtenir dans la membrane.

Ainsi par exemple pour préparer une membrane contenant 34 % de sous-unité T, on a utilisé, 2,5 équivalents molaires d'isophthalaldéhyde soit 0,3 g, 2,5**t** équivalents molaires de précurseur de formule (I'_{T1}), soit 2,281g pour t = 34 %, et 2,5(1-**t**) équivalents molaires de précurseur de formule (I'_{D1}), soit 1,624g pour t = 34 %,

Le procédé de préparation est le même quels que soient les pourcentages de chacun des précurseurs utilisés. Les précurseurs ont été solubilisés dans 80 ml de tetrahydrofurane (THF) anhydre. Après une nuit sous agitation magnétique à reflux, le mélange réactionnel a été évaporé à moitié de son volume initial (40 ml). 6,7 ml de mélange réactionnel a été coulé dans un pétri en téflon de 3,7 cm de diamètre déposé sur une plaque de mise à niveau. Puis le dispositif a été recouvert d'un papier filtre pour ralentir l'évaporation et ainsi limiter la création de bulles d'air. Au bout de 4 à 5 jours, lorsque l'évaporation du solvant a été complète, les films ont été placés dans une étuve sous vide à 70°C pour deux jours supplémentaires de séchage.

On a ainsi préparé les membranes suivantes, dont les pourcentages en moles de sous-unités D et T (exprimés par rapport au nombre de moles de sous-unités G) sont donnés dans le tableau 1 ci-après :

**TABLEAU 1**

| **Membranes** | **Composition des copolymères (en % en moles par rapport au nombre de moles de sous-unité G)** | |
|---|---|---|
| | **(I'_{D1})** | **(I'_{T1})** |
| **GD** * | 100 | 0 |
| **GDT**_{6,5} * | 93,5 | 6,5 |
| **GDT**₁₁ * | 89 | 11 |
| **GDT**_{22,2} | 77,8 | 22,2 |
| **GDT**₂₄ | 76 | 24 |
| **GDT**₃₄ | 66 | 34 |
| **GDT**₄₃ | 57 | 43 |
| **GDT**₄₇ * | 53 | 47 |
| **GDT**₅₁ * | 49 | 51 |
| **GDT**₇₀ * | 30 | 70 |
| **GT**₁₀₀ * | 0 | 100 |

| | | |
|---|---|---|
| * : Membrane comparative ne faisant pas partie de l'invention car contenant moins de 20 % ou plus de 45 % en moles de sous-unités T par rapport au nombre de moles de sous-unités G. | | |

La composition exacte en sous-unités D et T a été déterminée à partir des spectres ¹H-RMN par le calcul des nombres de protons correspondant au groupement méthyle de la sous-unité T dont le pic est situé vers 1 ppm.

Les données de spectroscopies de chacune des membranes ainsi préparées étaient les suivantes :
**GD** (*) : ¹H-RMN (300 MHz, CDCl₃) : 8,3 (él, 2H, CH=N) ; 8,0 (él, 1H, CH-2) ; 7,7 (él, 2H, CH-3) ;7,4 (él, 1H, CH-4) ; 3,7 (él, 4H, CH-7) ; 3,5 (él, 58H, CH-8,5) ; 2 (él, 4H, CH-6) ; 1,5 (él, 54H, CH-9). 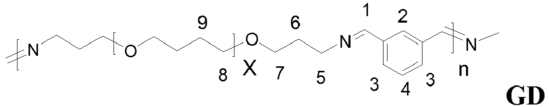
**GDT**_{6,5} (*) : ¹H-RMN (300 MHz, CDCl₃) : 8,25 (s, 2H, CH=N) ; 7,96 (s, 1H, CH-2) ; 7,71 (d, 2H, CH-3) ; 7,37 (t, 1H, CH-4) ; 3,3-3,8 (m, 64H, CH-5,7,8,10,11,13,14,15) ; 1,92 (t, 4H, CH-6) ; 1,65 (él, 49H, CH-9) ; 1,2 (m, 9,7H, CH-12). 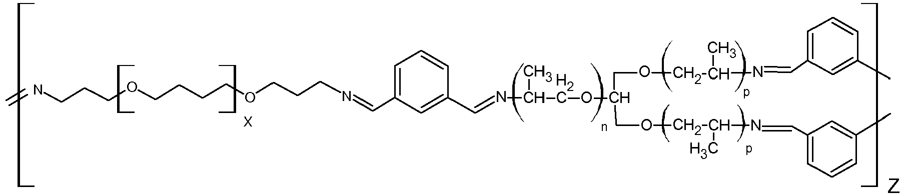
**GDT**₁₁ (*) : ¹H-RMN (300 MHz, CDCl₃) : 8,22 (s, 2H, CH=N) ; 7,93 (s, 1H, CH-2) ; 7,67 (d, 2H, CH-3) ; 7,34 (t, 1H, CH-4) ; 3,2-3,75 (m, 72H, CH-5,7,8,10,11,13,14,15) ; 1,90 (m, 4H, CH-6) ; 1,56 (él, 47H, CH-9) ; 1,05 (m, 17H, CH-12).
**GDT**₂₂ : ¹H-RMN (300 MHz, CDCl₃) : 8,28 (s, 2H, CH=N) ; 7,96 (s, 1H, CH-2) ; 7,72 (d, 2H, CH-3) ; 7,37 (t, 1H, CH-4) ; 3,14-3,66 (m, 82H, CH-5,7,8,10,11,13,14,15) ; 1,89 (m, 4H, CH-6); 1,56 (él, 41H, CH-9) ; 1,05 (m, 30,6H, CH-12).
**GDT**₂₄ : ¹H-RMN (300 MHz, CDCl₃) : 8,25 (s, 2H, CH=N) ; 7,96 (s, 1H, CH-2) ; 7,72 (d, 2H, CH-3) ; 7,36 (m, 1H, CH-4) ; 3,34-3,65 (m, 84H, CH-5,7,8,10,11,13,14,15) ; 1,88 (t, 4H, CH-6); 1,56 (él, 40H, CH-9) ; 1,05 (m, 37H, CH-12).
**GDT**₃₄ : ¹H-RMN (300MHz, CDCl₃): 8,33 (d, 2H, CH=N) ; 8,02 (s, 1H, CH-2) ; 7,78 (d, 2H, CH-3) ; 7,44 (m, 1H, CH-4) ; 3,40-3,75 (m, 93H, CH-5,7,8,10,11,13,14,15) ; 1,90 (m, 4H, CH-6); 1, 65 (él, 34H, CH-9) ; 1,10 (m, 52H, CH-12).
**GDT**₄₃ : ¹H-RMN (300 MHz, CDCl₃) : 8,35 (d, 2H, CH=N) ; 8,04 (s, 1H, CH-2) ; 7,80 (d, 2H, CH-3) ; 7,46 (m, 1H, CH-4) ; 3,45-3,79 (m, 102H, CH-5,7,8,10,11,13,14,15) ; 1,93 (m, 4H, CH-6) ; 1,66 (él, 30H, CH-9) ; 1,12 (m, 66H, CH-12).
**GDT**₄₇ (*) : ¹H-RMN (300 MHz, CDCl₃) : 8,36 (d, 2H, CH=N) ; 8,02(s, 1H, CH-2) ; 7,78 (d, 2H, CH-3) ; 7,42 (m, 1H, CH-4) ; 3,40-3,76 (m, 106H, CH-5,7,8,10,11,13,14,15) ; 1,94 (m, 4H, CH-6); 1,60 (él, 27H, CH-9) ; 1,12 (m, 72H, CH-12).
**GDT**₅₁ (*) : ¹H-RMN (300 MHz, CDCl₃) : 8,24 (d, 2H, CH=N) ; 7,95 (s, 1H, CH-2) ; 7,44 (d, 2H, CH-3) ; 7,37 (m, 1H, CH-4) ; 3,32-3,96 (m, 110H, CH-5,7,8,10,11,13,14,15) ; 1,90 (m, 4H, CH-6); 1,60 (él, 25H, CH-9) ; 1,12 (m, 78H, CH-12).
**GDT₇₀** (*) **:** ¹H-RMN (300 MHz, CDCl₃) : 8,27 (s, 2H, CH=N) ; 7,96 (s, 1H, CH-2) ; 7,47 (d, 2H, CH-3) ; 7,39 (m, 1H, CH-4) ; 3,36-3,98 (m, 129H, CH-5,7,8,10,11,13,14,15) ; 1,90 (m, 4H, CH-6) ; 1,60 (él, 16H, CH-9) ; 1,12 (m, 107H, CH-12).
**GT₁₀₀** (*) : ¹H-RMN (300MHz, CDCl₃) : 8,3 (d, 2H, CH=N) ; 8,0 (s, 1H, CH-2) ; 7,7 (d, 2H, CH-3) ; 7,4 (t, 1H, CH-4) ; 3,3-3,8 (m, 158H, CH-5, 7, 8, 9, 10) ; 1,1 (m, 153H, CH-6).

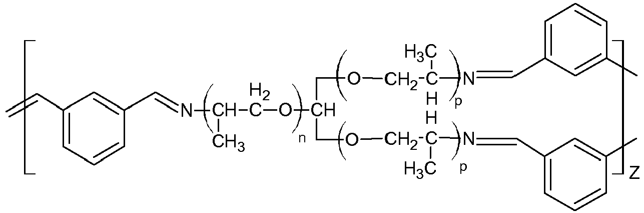

Les analyses de calorimétrie différentielle à balayage révèlent que les polymères constituant les membranes sont des élastomères qui présentent des températures de transition vitreuses comprises entre -72 ,03 et -61,67°C (1^{er} cycle).

Les températures de transition vitreuse (Tg, 1^{er} et 2^{ème} cycle), de cristallisation (Tc) et de fusion (Tm) de certaines des membranes préparées dans cet exemple sont données dans le tableau 2 ci-après :

**TABLEAU 2**

| Membranes | Tg (°C) | | Tc (°C) | | Tm (°C) | |
|---|---|---|---|---|---|---|
| | 1^{er} cycle | 2^{ème} cycle | 1^{er} cycle | 2^{ème} cycle | 1^{er} cycle | 2^{ème} cycle |
| **GD** * | -65,68 | -65,28 | - | - | 10,73 | 13,28 |
| **GDT**_{6,5} * | -72,03 | -63,31 | -31,55 | - | 9,27 | 11,10 |
| **GDT**₁₁ * | -69,51 | -68,25 | -10,05 | -30,13 | 5,01 | 4,64 |
| **GDT**₂₂,₂ | -68,88 | -67,62 | -16,22 | -26,99 | 6,07 | 6,76 |
| **GDT**₃₄ | -65,73 | -64,46 | -14,09 | -25,79 | 7,23 | 10,04 |
| **GDT**₄₇ * | -102,62 | -102,62 | -12,33 | -17,88 | 6,54 | 4,92 |
| | -64,27 | -64,27 | | | | |
| | 87,59 | 88,60 | | | | |
| **GDT**₇₀* | -61,31 | -60,68 | - | - | - | - |
| **GT**₁₀₀* | -101,67 | -102,30 | - | -10,51 | 19,12 | 9,66 |
| | -61,67 | -61,94 | | | 37,47 | |
| | 96,35 | | | | | |

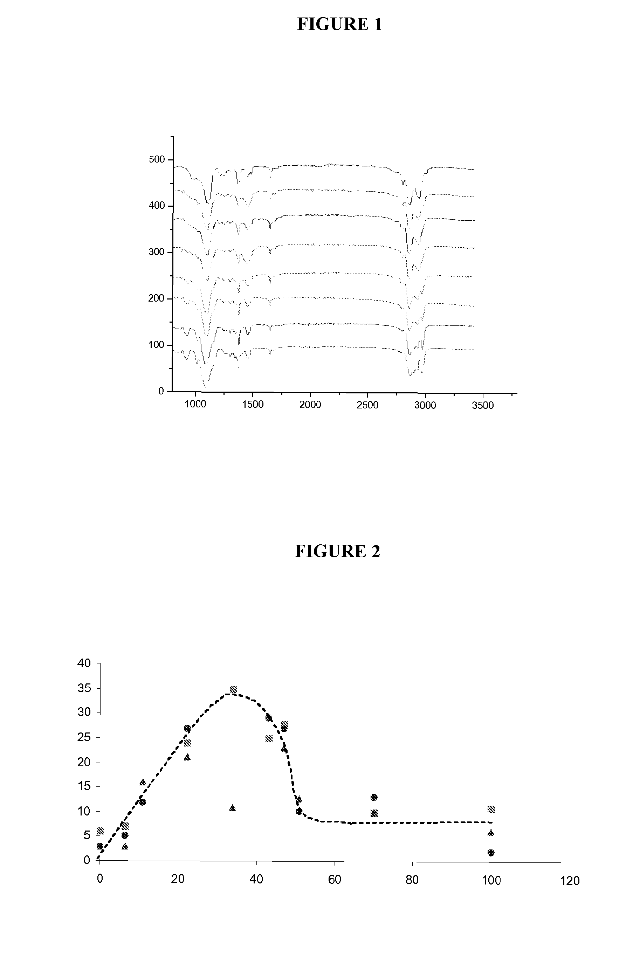

**L**a figure 1 annexée représente les spectres IR de certaines des membranes préparées dans cet exemple. Sur cette figure, la transmittance exprimée en unités arbitraires est fonction de la longueur d'onde exprimée en cm⁻¹. En partant de la courbe supérieure, les différentes courbes correspondent, dans cet ordre, aux spectres IR des membranes suivantes GD, GDT_{6,5}, GDT₁₁, GDT_{22,2}, GDT₃₄, GDT₅₁, GDT₇₀ et GT₁₀₀.

Ces résultats mettent en évidence la présence des bandes de vibration des groupements éthers νCH₂-O-CH₂ = 1100 cm⁻¹, imine νCH=N = 1600 cm⁻¹ et alkyle νCH_{2,3}= 2800-3000 cm⁻¹.

### 2) Etude des propriétés de transport des gaz des membranes synthétisées

Deux mesures ont été effectuées pour caractériser les propriétés de transport gazeux des membranes synthétisées dans cet exemple, c'est-à-dire ayant différentes teneurs en sous-unité T.

La détermination des coefficients de perméabilité et de diffusion ainsi que la détermination des coefficients de solubilité (S).

La figure 2 annexée montre l'évolution des coefficients de perméabilité (Barrer) des membranes vis-à-vis de l'hélium (He : carrés pleins), de l'azote (N₂ : triangles pleins) et de l'oxygène (O₂ : disques pleins), en fonction de la teneur en sous-unité T (en % en moles).

La courbe en forme de cloche montre une augmentation des perméabilités pour les trois gaz étudiés jusqu'à une teneur en sous-unités T de 34 % en moles suivie d'une diminution à partir des valeurs supérieures. Les membranes conformes à la présente invention, c'est-à-dire dans lesquelles la teneur en sous-unités T varie de 20 à 40 % en moles par rapport au nombre de moles de sous-unités G, présentent les meilleurs propriétés de perméabilité.

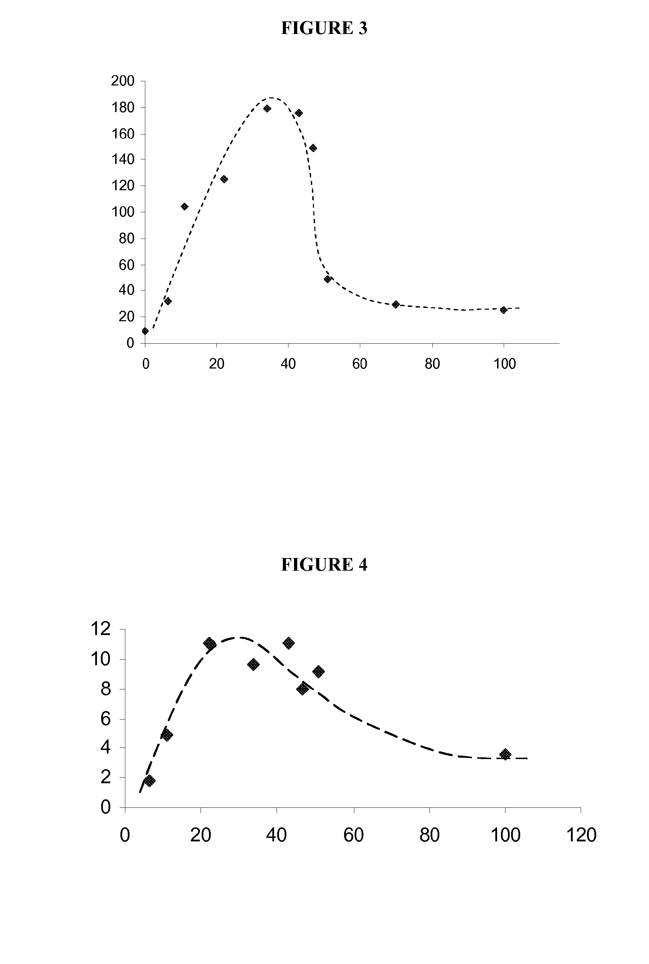

La figure 3 annexée montre l'évolution des coefficients de perméabilité (Barrer) des membranes vis-à-vis du dioxyde de carbone, en fonction de la teneur en sous-unité T (en % en moles). Les meilleurs résultats sont également obtenus avec les membranes conformes à la présente invention, c'est-à-dire dans lesquelles la teneur en sous-unités T varie de 20 à 40 % en moles par rapport au nombre de moles de sous-unités G, la perméabilité maximale étant obtenue avec la membrane dans laquelle la teneur en sous-unité T est de 34 % en moles environ.

L'évolution des valeurs de coefficients de diffusion au dioxyde de carbone (D_{CO2}), déterminées par la méthode du « time lag » est représentée sur la figure 4 annexée, sur laquelle D_{CO2} 10⁻⁷.cm².s⁻¹) est exprimé en fonction de la teneur en sous-unité T (en % en moles). La courbe obtenue présente également une forme de cloche montrant que les meilleurs résultats sont obtenus avec les membranes conformes à la présente invention, c'est-à-dire les membranes dans lesquelles la teneur en sous-unité T varie de 20 à 45 % en moles par rapport au nombre de moles de sous-unités G, avec un maximum à 34% en moles environ.

Les paramètres de solubilité dans le phénomène global de perméabilité au CO₂, on été évalué en mesurant la masse de CO₂ absorbée à l'aide de la balance de Cahn pour quelques membranes à différentes teneurs en sous-unité T (GDT_{6,5}, GDT₁₁, GDT_{22,2}, GDT₃₄ et GDT₅₁).

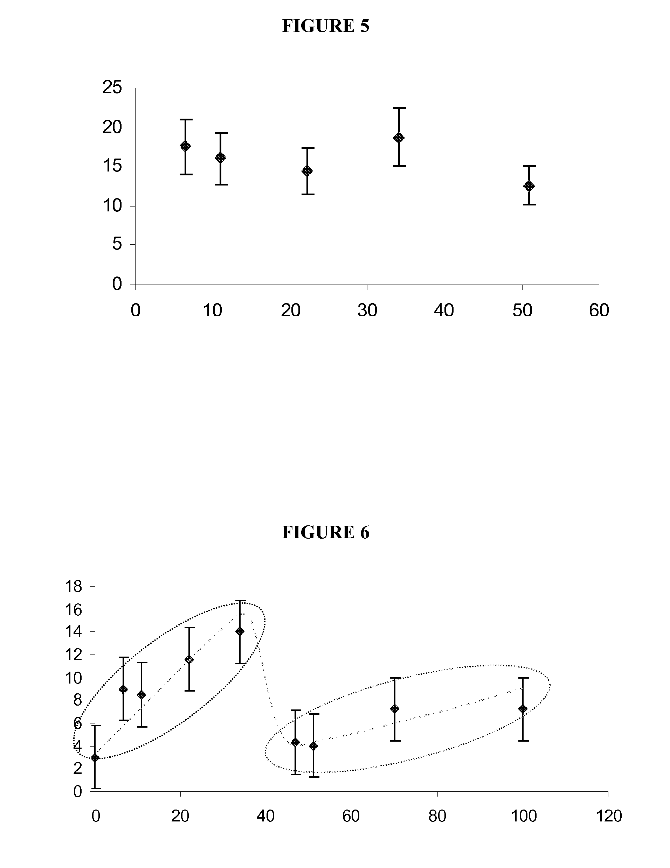

Les résultats obtenus sont représentés sur la figure 5 annexée sur laquelle le coefficient de sorption du CO₂ (S CO₂ 10⁻³.cm³ (STP).cm⁻¹) est fonction de la teneur en sous-unité T (en % en moles).

Ces résultats montrent que l'évolution du coefficient de sorption au CO₂ semble linéaire avec une très légère tendance décroissante (GDT₅₁). Les coefficients des paramètres de transport de gaz sont liés par la relation Pe = D x S dans laquelle Pe est le coefficient de perméabilité, D est le coefficient de diffusion et S est le coefficient de sélectivité. Cela indique que le facteur diffusif est le principal facteur qui contrôle le phénomène de perméabilité au CO₂.

La figure 6 annexée représente la perméabilité des membranes vis-à-vis du CO₂ par rapport à la perméabilité des membranes vis-à-vis de l'azote (perméabilité sélective ou « permsélectivité » CO₂/N₂). Sur cette figure, le rapport des perméabilités sélectives CO₂/N₂ est fonction de la teneur en sous-unités T (en % en moles).

Ces résultats montrent que la permsélectivité CO₂/N₂ augmente de GD à GDT₃₄ puis chute pour les membranes ayant des teneurs supérieures en sous-unités T.

### Exemple 2

### 1) Synthèse d'une membrane ayant une teneur de 24 % en moles en sous-unité T (par rapport au nombre de moles de sous-unité G) en présence d'un sel de zinc

La membrane a été obtenue par polycondensation des sous-unités D, G et T, à partir des précurseurs suivants :
- poly(tetrahydrofuran) bis(3-aminopropyl) : 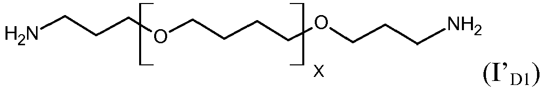 dans laquelle x est tel que le précurseur de formule (I'_{D1}) à une masse moléculaire d'environ 1100 g/mol ;
- 5-tert-butyl-2-hydroxybenzène-1,3-dicarbaldéhyde (précurseur de la sous-unité G): 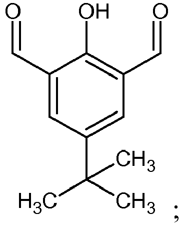
- glycérol tris[poly(propylène glycol) éther à amines terminales : 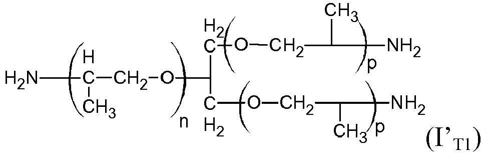
dans laquelle n = p = 17 environ de telle sorte que ledit précurseur de formule ait une masse moléculaire d'environ 3000 g/mol.

La polycondensation des sous-unités a été réalisée selon le procédé détaillé ci-dessus à l'exemple 1, en utilisant 2,5 équivalents molaires de 5-tert-butyl-2-hydroxybenzène-1,3-dicarbaldéhyde soit 0,4 g, 0,6 équivalent molaire de précurseur de formule (I'_{T1}) soit 1,39 g pour t = 24 % en moles, et 1,9 équivalents molaires de précurseur de formule (I'_{D1}), soit 1,62 g pour t = 24 % en moles, dans 300 ml de THF renfermant en outre 1 équivalent molaire, soit 0,14 g d'acétate de zinc. La membrane ainsi obtenue a été dénommée GDT₂₄ Zn²⁺

Une membrane similaire, c'est-à-dire préparée à partir des mêmes précurseurs en quantités identiques a été préparée dans le THF, mais en l'absence d'acétate de zinc. La membrane ainsi obtenue a été dénommée GDT₂₄

### 2) Structure des membranes GDT₂₄ Zn²⁺ et GDT₂₄

Les membranes ont été soumises à une analyse par diffraction des rayons X (XRD), à l'aide d'un diffractomètre à haute résolution commercialisé sous la dénomination X'Pert PRO par la société PANalytical au rayonnement Cu (λ = 1,5405 Ǻ) en utilisant un filtre Ni. La radiation diffusée a été collectée sur un collecteur à une dimension commercialisé sous la dénomination X'Celerator par la société PANalytical. La distance du détecteur à l'échantillon de membrane était de 240 mm.

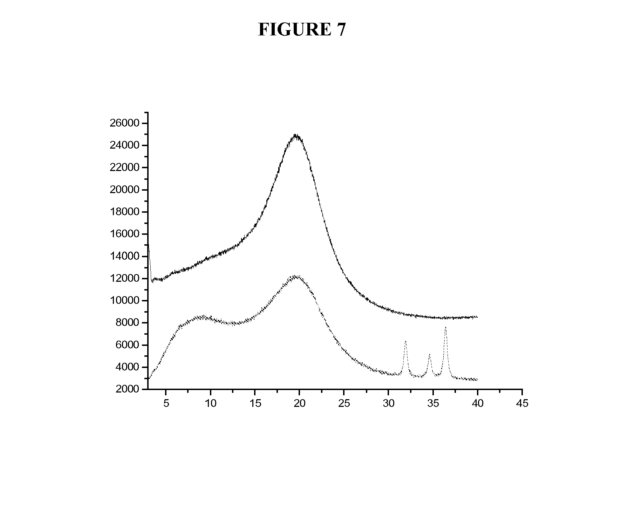

La figure 7 annexée représente le spectre de diffraction des membranes GDT₂₄ Zn²⁺ et GDT₂₄, sur laquelle, l'intensité (exprimée en unités arbitraires) est fonction de l'angle de diffraction en degrés. Sur cette figure, la courbe haute correspond au spectre de la membrane GDT₂₄ alors que la courbe basse correspond à celui de la membrane GDT₂₄ Zn²⁺. Ces diffractogrammes mettent en évidence l'apparition de nouveaux pics montrant une certaine organisation de la structure à faible distance au sein du polymère amorphe GDT₂₄ Zn²⁺. La résonnance magnétique nucléaire (non représentée) met en évidence la formation des complexes entre les sous-unités T et Zn²⁺ par déplacement des pics des protons imines et aromatiques.

La structure des membranes ainsi préparées a été étudiée par calorimétrie différentielle à balayage à l'aide d'un calorimètre vendu sous la référence TA Instruments 2920 Modulated DSC par la société Perkin Elmer.

Les analyses calorimétriques montrent une diminution de la température de transition vitreuse à cause de la réticulation créée par la formation des complexes polymériques :
- GDT²⁴ : Tg = -64,46°C
- GDT₂₄ Zn²⁺ : -60,42°C

Les coefficients de perméabilité (Pe) de ces deux membranes vis-à-vis de He, N₂, et de CO₂, ainsi que leurs perméabilités relatives CO₂/He et CO₂/N₂ ont été mesurés et sont reportées dans le tableau 3 ci-après :

**TABLEAU 3**

| Gaz | Pe (Barrer) | |
|---|---|---|
| | GDT₂₄ | GDT₂₄ Zn²⁺ |
| He | 14 | 33 |
| N₂ | 14 | 15 |
| CO₂ | 125 | 167 |
| CO₂/He | 8,9 | 5,1 |
| CO₂/N₂ | 8,9 | 11,1 |

Le tableau 4 ci-après regroupe les coefficients de perméabilité, de diffusion au CO₂ (D_{CO2}), de solubilité (S) et le « time-lag » pour chacune des deux membranes :

**TABLEAU 4**

| Membrane | Pe (Barrer) | « Time-lag » (s) | D_{CO2} (10⁻⁷cm².S⁻¹) | S_{time-lag} 10⁻³ (cm³(STP)cm³.cm⁻¹_{Hg}) |
|---|---|---|---|---|
| GDT₂₄ | 125 | 676 | 6,16 | 20 |
| GDT₂₄ Zn²⁺ | 167 | 1166 | 2,29 | 73 |

L'ensemble de ces résultats démontre que la présence de zinc conduit à une augmentation de la perméabilité et de la sélectivité de la membrane, tout particulièrement vis-à-vis du dioxyde de carbone.

## Revendications

1. Membrane polymère auto-supportée, **caractérisée en ce qu'**elle est constituée par un polymère dynamique formé d'unités récurrentes de formule (I) suivante : 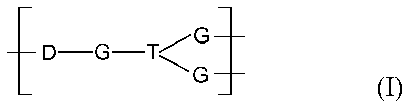 dans laquelle :
- **D** représente une sous-unité de formule (I_{D}) suivante : 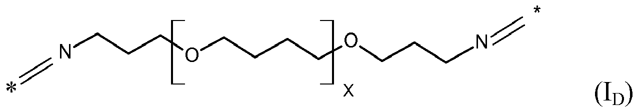 dans laquelle :
▪ x est un nombre entier qui varie de 10 à 20 ; et
▪ * est le point d'attachement de D à G par l'intermédiaire d'une liaison imine ;
- **G** représente une sous-unité de formule (I_{G}) suivante : 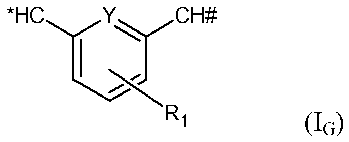 dans laquelle :
▪ R₁ représente un atome d'hydrogène ou un radical alkyle ayant de 1 à 4 atomes de carbone,
▪ Y représente un atome d'azote ou C-R₂ avec R₂ = H ou OH ;
▪ # est le point d'attachement de G à T par l'intermédiaire d'une liaison imine réversible ;
- **T** représente une sous-unité de formule (I_{T}) suivante : 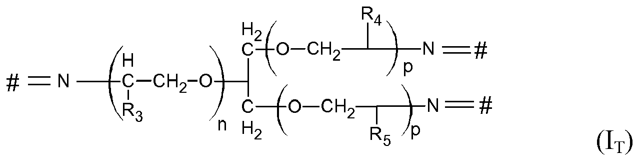
dans laquelle :
▪ R₃ représente un atome d'hydrogène ou un radical alkyle ayant de 1 à 6 atomes de carbone,
▪ R₄ et R₅, identiques ou différents, représentent un atome d'hydrogène ou un radical alkyle ayant de 1 à 6 atomes de carbone,
▪ n est un nombre entier qui varie de 1 à 20,
▪ p est un nombre entier qui varie de 1 à 20,
▪ # représente le point d'attachement de T à G ;
étant entendu que lesdites sous-unité T représentent de 20 à 45 % en mole par rapport au nombre de moles de sous-unités G constituant ledit polymère.

2. Membrane selon la revendication 1, **caractérisée en ce que** les radicaux alkyle mentionnés pour le radical R₁ de la sous-unité de formule (I_{G}) sont choisis parmi les radicaux méthyle, éthyle, n-propyle, n-butyle et *t*-butyle.

3. Membrane selon la revendication 2, **caractérisée en ce que** le radical R₁ de la sous-unité de formule (I_{G}) est un radical *t*-butyle en position para par rapport à Y.

4. Membrane selon la revendication 1 ou 2, **caractérisée en ce que** la sous-unité (I_{G}) est choisie parmi les sous-unités (I_{G1}) à (I_{G3}) suivantes : 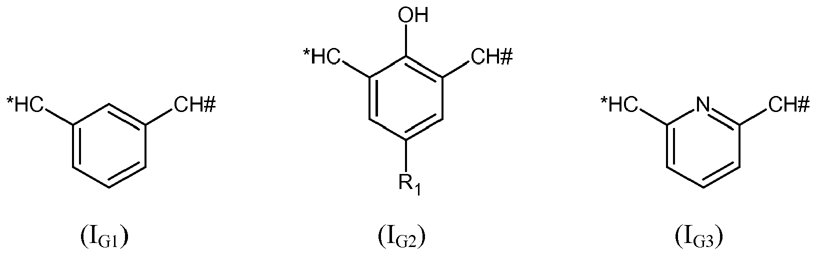 étant entendu que dans la sous-unité de formule (I_{G2}), le radical R₁ a les mêmes significations que celles indiquées à la revendication 1 ou 2 pour la sous-unité (I_{G}).

5. Membrane selon la revendication 4, **caractérisée en ce que** dans la sous-unité de formule (I_{G2}), le radical R₁ est un radical *t*-butyle.

6. Membrane selon la revendication 4 ou 5, **caractérisée en ce qu'**elle est constituée par un polymère formé d'unités récurrentes de formule (I) dans laquelle la sous-unité (I_{G}) est une sous-unité (I_{G2}) ou (I_{G3}) complexant au moins un ion métallique de transition.

7. Membrane selon la revendication 6, **caractérisée en ce que** l'ion métallique de transition est choisi parmi Ag(I), Cu(I), Co(II), Fe(II), et Zn(II).

8. Membrane selon l'une quelconque des revendications précédentes, **caractérisée en ce que** la sous-unité T est choisie parmi les sous-unités de formule (I_{T}) dans lesquelles R₄ et R₅ sont identiques et représentent un radical méthyle.

9. Membrane selon l'une quelconque des revendications précédentes, **caractérisée en ce que** la sous-unité T est une sous-unité de formule (I_{T}) dans laquelle les radicaux R₃, R₄ et R₅ sont identiques et représentent un radical méthyle et n=p.

10. Membrane selon l'une quelconque des revendications précédentes, **caractérisée en ce que** les sous-unités T représentent de 30 à 38 % en mole par rapport au nombre de mole de sous-unités G constituant ledit copolymère.

11. Membrane selon la revendication 10, **caractérisée en ce que** les sous-unités T représentent 34 % en mole par rapport au nombre de mole de sous-unités G constituant ledit copolymère.

12. Membrane selon l'une quelconque des revendications précédentes, **caractérisée en ce qu'**elle a une épaisseur variant de 300 à 600 µm.

13. Procédé de préparation d'une membrane polymère autosupportée constituée par un polymère dynamique formé d'unités récurrentes de formule (I) telle que définie à l'une quelconque des revendications précédente, **caractérisé en ce qu'**il comprend les étapes suivantes :
a) la préparation d'un mélange réactionnel comprenant, en solution dans au moins un solvant organique :
- au moins un précurseur d'une sous-unité D choisi parmi les précurseurs de formule (I'_{D}) suivante : 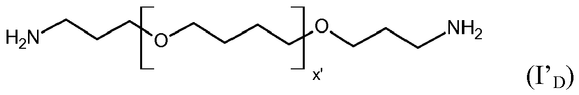 dans laquelle x' est un nombre entier qui varie de 10 à 20 ;
- au moins un précurseur d'une sous-unité G choisi parmi les précurseurs de formule (I'_{G}) suivante : 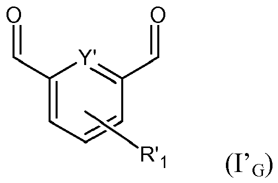 dans laquelle Y' représente un atome d'azote ou C-R'₂ avec R'₂ = H ou OH et R'₁ représente un atome d'hydrogène ou un radical alkyle ayant de 1 à 4 atomes de carbone ; et
- au moins un précurseur d'une sous-unité T choisi parmi les précurseurs de formule (I'_{T}) suivante : 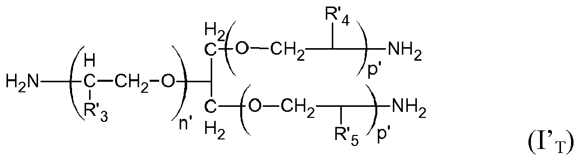 dans laquelle :
▪ R'₃ représente un atome d'hydrogène ou un radical alkyle ayant de 1 à 6 atomes de carbone,
▪ R'₄ et R'₅, identiques ou différents, représentent un atome d'hydrogène ou un radical alkyle ayant de 1 à 6 atomes de carbone,
▪ n' est un nombre entier qui varie de 1 à 20,
▪ p' est un nombre entier qui varie de 1 à 20,
étant entendu qu'au sein dudit mélange réactionnel, la quantité de précurseurs de formule (I'_{T}) représente de 20 à 45 % en mole par rapport au nombre de moles de précurseurs de formule (I'_{G}) présents au sein dudit mélange réactionnel ;
b) la polycondensation desdits précurseurs par chauffage du mélange réactionnel au reflux pour obtenir un polymère dynamique formé d'unités récurrentes de formule (I) ;
c) la mise en forme de la membrane et l'évaporation du solvant organique.

14. Procédé selon la revendication 13, **caractérisé en ce que** le solvant organique du mélange réactionnel est choisi parmi le tetrahydrofurane, le chloroforme, le dichlorométhane, et leurs mélanges.

15. Procédé selon la revendication 13 ou 14, **caractérisé en ce que** le précurseur des sous-unités G est choisi parmi les précurseurs de formules (I'_{G2}) et (I'_{G3}) suivantes : 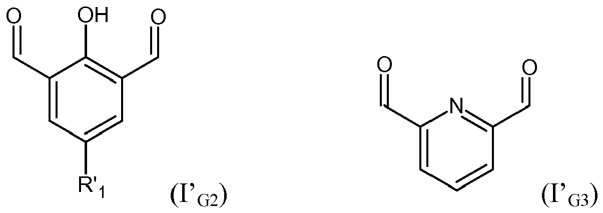 dans laquelle R'₁ a la même signification que celle indiquée à la revendication 13 pour la sous-unité (I'_{G}).

16. Procédé selon la revendication 15, **caractérisé en ce que** le mélange réactionnel préparé lors de l'étape a) renferme en outre au moins un sel d'un métal de transition.

17. Procédé selon la revendication 16, **caractérisé en ce que** le sel d'un métal de transition est choisi parmi les sels d'argent (Ag⁺), de cuivre (Cu⁺), de cobalt (Co²⁺), de fer (Fe²⁺) et de zinc (Zn²⁺) dans lesquels l'anion est un acétate, un trifluorométhanesulfonate, un tetrafluoroborate, un hexafluorophosphate, un nitrate, ou un perchlorate.

18. Utilisation d'une membrane auto-supportée telle que définie à l'une quelconque des revendications 1 à 12, pour la séparation sélective d'espèces chimiques.

19. Utilisation selon la revendication 18, pour la séparation sélective d'espèces gazeuses contenues dans les gaz naturels ou industriels.

20. Utilisation selon la revendication 19, pour la séparation sélective du dioxyde de carbone.

21. Procédé de séparation d'une espèce chimique **caractérisé en ce qu'**il consiste à faire passer un mélange gazeux ou liquide contenant l'espèce que l'on souhaite séparer à travers une membrane polymère auto-supportée telle que définie à l'une quelconque des revendications 1 à 12.

22. Utilisation d'une membrane auto-supportée telle que définie à l'une quelconque des revendications 1 à 12, comme électrolyte polymère pour les cellules solaires et les piles à combustible.

## Patentansprüche

1. Selbsttragende Polymermembran, **dadurch gekennzeichnet, dass** sie von einem dynamischen Polymer gebildet wird, das von sich wiederholenden Einheiten der folgenden Formel (I) gebildet wird: 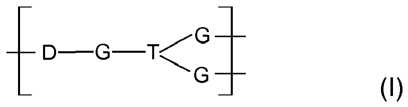 wobei:
- D eine Untereinheit der folgenden Formel (I_{D}) darstellt: 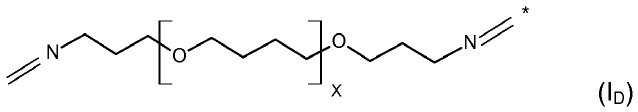 wobei:
• x eine ganze Zahl ist, die von 10 bis 20 schwankt, und
• * der Anlagerungspunkt von D an G mit Hilfe einer Iminoverbindung ist,
- G eine Untereinheit der folgenden Formel (I_{G}) darstellt: 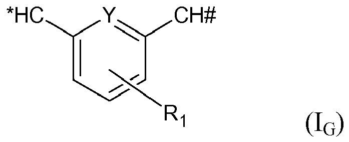 wobei:
• R₁ ein Wasserstoffatom oder ein Alkylradikal mit 1 bis 4 Kohlenstoffatomen darstellt,
• Y ein Stickstoffatom oder C-R₂ mit R₂ = H oder OH darstellt,
• # der Anlagerungspunkt von G an T mit Hilfe einer reversiblen Iminoverbindung ist,
- T eine Untereinheit der folgenden Formel (I_{T}) darstellt: 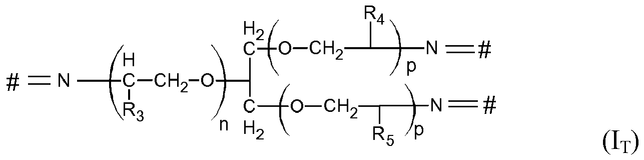 wobei:
• R₃ ein Wasserstoffatom oder ein Alkylradikal mit 1 bis 6 Kohlenstoffatomen darstellt,
• R₄ und R₅, die identisch oder unterschiedlich sind, ein Wasserstoffatom oder ein Alkylradikal mit 1 bis 6 Kohlenstoffatomen darstellen,
• n eine ganze Zahl ist, die von 1 bis 20 schwankt,
• p eine ganze Zahl ist, die von 1 bis 20 schwankt,
• # den Anlagerungspunkt von T an G darstellt,
wobei es sich versteht, dass die Untereinheiten T 20 bis 45 Mol-% im Verhältnis zur Molanzahl der Untereinheiten G darstellen, die das Polymer bilden.

2. Membran nach Anspruch 1, **dadurch gekennzeichnet, dass** die für das Radikal R₁ der Untereinheit der Formel (I_{G}) erwähnten Alkylradikale aus den Metyl-, Ethyl-, n-Propyl-, n-Butyl- und t-Butylradikalen ausgewählt sind.

3. Membran nach Anspruch 2, **dadurch gekennzeichnet, dass** das Radikal R₁ der Untereinheit der Formel (I_{G}) ein *t*-Butylradikal in para-Position im Verhältnis zu Y ist.

4. Membran nach Anspruch 1 oder 2, **dadurch gekennzeichnet, dass** die Untereinheit (I_{G}) aus den folgenden Untereinheiten (I_{G1}) bis (I_{G3}) ausgewählt ist: 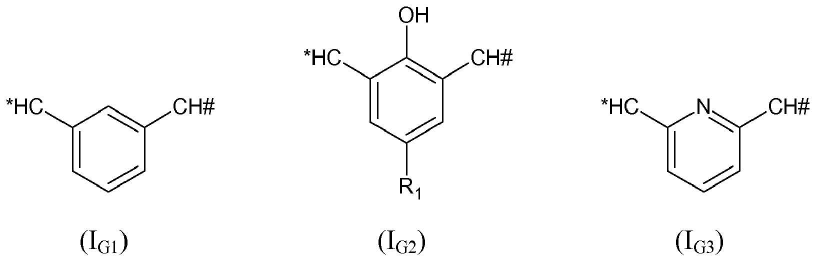 wobei es sich versteht, dass in der Untereinheit der Formel (I_{G2}) das Radikal R₁ dieselben Bedeutungen hat wie die, die im Anspruch 1 oder 2 für die Untereinheit (I_{G}) genannt sind.

5. Membran nach Anspruch 4, **dadurch gekennzeichnet, dass** das Radikal R₁ in der Untereinheit der Formel (I_{G2}) ein t-Butylradikal ist.

6. Membran nach Anspruch 4 oder 5, **dadurch gekennzeichnet, dass** sie von einem Polymer gebildet wird, das aus sich wiederholenden Einheiten der Formel (I) gebildet wird, wobei die Untereinheit (I_{G}) eine Untereinheit (I_{G2}) oder (I_{G3}) ist, die mindestens ein metallisches Übergangsion komplexiert.

7. Membran nach Anspruch 6, **dadurch gekennzeichnet, dass** das metallische Übergangsion aus dem Ag(I), Cu(I), Co(II), Fe(II) und Zn(II) ausgewählt ist.

8. Membran nach einem der vorangehenden Ansprüche, **dadurch gekennzeichnet, dass** die Untereinheit T aus den Untereinheiten der Formel (I_{T}) ausgewählt ist, wobei R₄ und R₅ identisch sind und ein Methylradikal darstellen.

9. Membran nach einem der vorangehenden Ansprüche, **dadurch gekennzeichnet, dass** die Untereinheit T eine Untereinheit der Formel (I_{T}) ist, wobei die Radikale R₃, R₄ und R₅ identisch sind und ein Methylradikal darstellen und n = p.

10. Membran nach einem der vorangehenden Ansprüche, **dadurch gekennzeichnet, dass** die Untereinheiten T 30 bis 38 Mol-% im Verhältnis zur Molanzahl von Untereinheiten G darstellen, die das Copolymer bilden.

11. Membran nach Anspruch 10, **dadurch gekennzeichnet, dass** die Untereinheiten T 34 Mol-% im Verhältnis zur Molanzahl von Untereinheiten G darstellen, die das Copolymer bilden.

12. Membran nach einem der vorangehenden Ansprüche, **dadurch gekennzeichnet, dass** sie eine Dicke hat, die von 300 bis 600 µm schwankt.

13. Herstellungsverfahren einer selbsttragenden Polymermembran, die von einem dynamischen Polymer gebildet wird, das von sich wiederholenden Einheiten der Formel (I) gebildet wird, nach einem der vorangehenden Ansprüche, **dadurch gekennzeichnet, dass** es die folgenden Schritte umfasst:
a) das Zubereiten eines Redaktionsgemischs, das gelöst in mindestens einem organischen Lösungsmittel umfasst:
- mindestens einen Vorläufer einer Untereinheit D, der aus den Vorläufern der folgenden Formel (I'_{D}) ausgewählt ist: 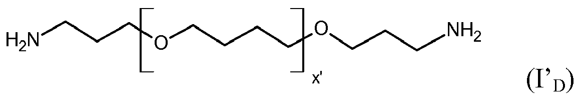 wobei x' eine ganze Zahl ist, die von 10 bis 20 schwankt,
- mindestens einen Vorläufer einer Untereinheit G, der aus den Vorläufern der folgenden Formel (I'_{G}) ausgewählt ist: 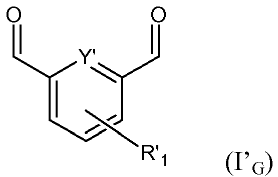 wobei Y' ein Stickstoffatom darstellt oder C-R'₂ mit R'₂ = H oder OH und R'₁ ein Wasserstoffatom darstellt oder ein Alkylradikal mit 1 bis 4 Kohlenstoffatomen, und
- mindestens einen Vorläufer einer Untereinheit T, der aus den Vorläufern der folgenden Formel (I'_{T}) ausgewählt ist: 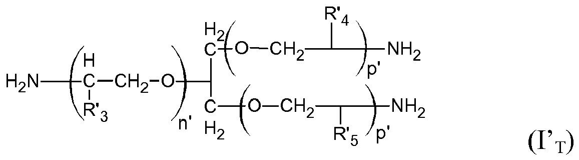 wobei:
• R'₃ ein Wasserstoffatom oder ein Alkylradikal mit 1 bis 6 Kohlenstoffatomen darstellt,
• R'₄ und R'₅, die identisch oder unterschiedlich sind, ein Wasserstoffatom oder ein Alkylradikal mit 1 bis 6 Kohlenstoffatomen darstellen,
• n' eine ganze Zahl ist, die von 1 bis 20 schwankt,
• p' eine ganze Zahl ist, die von 1 bis 20 schwankt,
wobei es sich versteht, dass innerhalb des Redaktionsgemischs die Menge von Vorläufern der Formel (I'_{T}) 20 bis 45 Mol-% im Verhältnis zur Molanzahl von Vorläufern der Formel (I'_{G}), die in dem Redaktionsgemisch vorhanden sind, darstellt,
b) das Polykondensieren der Vorläufer durch Erhitzen des Redaktionsgemischs im Rückfluss, um ein dynamisches Polymer zu erhalten, das von sich wiederholenden Einheiten der Formel (I) gebildet wird,
c) das Formen der Membran und das Verdampfen des organischen Lösungsmittels.

14. Verfahren nach Anspruch 13, **dadurch gekennzeichnet, dass** das organische Lösungsmittel des Redaktionsgemischs aus dem Tetrahydrofuran, dem Chloroform, dem Dichlormethan und ihren Gemischen ausgewählt ist.

15. Verfahren nach Anspruch 13 oder 14, **dadurch gekennzeichnet, dass** der Vorläufer der Untereinheiten G aus den Vorläufern der folgenden Formeln (I'_{G2}) und (I'_{G3}) ausgewählt ist: 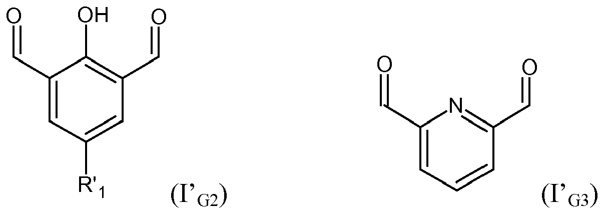 wobei R'₁ dieselbe Bedeutung hat wie die, die in Anspruch 13 für die Untereinheit (I'_{G}) angegeben ist.

16. Verfahren nach Anspruch 15, **dadurch gekennzeichnet, dass** das in Schritt a) zubereitete Redaktionsgemisch ferner mindestens ein Salz eines Übergangsmetalls einschließt.

17. Verfahren nach Anspruch 16, **dadurch gekennzeichnet, dass** das Salz eines Übergangsmetalls aus den Silbersalzen (Ag⁺), den Kupfersalzen (Cu⁺), den Kobaltsalzen (Co²⁺), den Eisensalze (Fe²⁺) und den Zinksalzen (Zn²⁺) ausgewählt ist, wobei das Anion ein Acetat, ein Trifluormethansulfonat, ein Tetrafluorborat, ein Hexafluorphosphat, ein Nitrat oder ein Perchlorat ist.

18. Verwendung einer selbsttragenden Membran nach einem der Ansprüche 1 bis 12 für die selektive Trennung chemischer Spezies.

19. Verwendung nach Anspruch 18 für die selektive Trennung gasförmiger Spezies, die in den natürlichen oder industriellen Gasen enthalten sind.

20. Verwendung nach Anspruch 19 für die selektive Trennung des Kohlendioxids.

21. Trennungsverfahren einer chemischen Spezies, **dadurch gekennzeichnet, dass** es darin besteht, ein gasförmiges oder flüssiges Gemisch, das die Spezies enthält, die separiert werden soll, durch eine selbsttragende Polymermembran nach einem der Ansprüche 1 bis 12 zu leiten.

22. Verwendung einer selbsttragenden Membran nach einem der Ansprüche 1 bis 12 als Polymerelektrolyt für die Sonnenkollektoren und die Brennstoffzellen.

## Claims

1. A self-supporting polymeric membrane, **characterized in that** it is formed from a dynamic polymer formed from repeating units of formula (I) below: 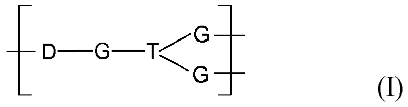 in which:
- **D** represents a subunit of formula (I_{D}) below: 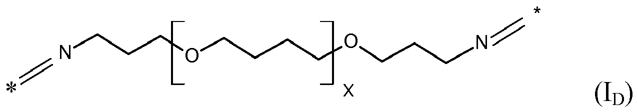 in which:
▪ x is an integer ranging from 10 to 20; and
▪ * is the point of attachment of D to G via an imine bond;
- **G** represents a subunit of formula (I_{G}) below: 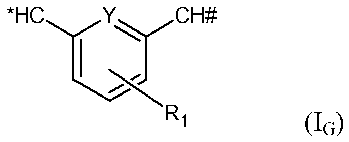 in which:
▪ R₁ represents a hydrogen atom or an alkyl radical containing from 1 to 4 carbon atoms,
▪ Y represents a nitrogen atom or C-R₂ with R₂ = H or OH;
▪ # is the point of attachment of G to T via a reversible imine bond;
- **T** represents a subunit of formula (I_{T}) below: 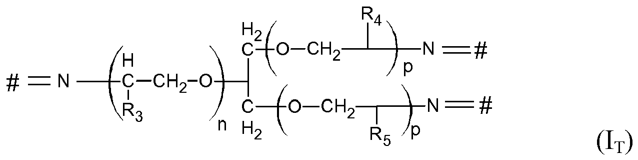 in which:
▪ R₃ represents a hydrogen atom or an alkyl radical containing from 1 to 6 carbon atoms,
▪ R₄ and R₅, which may be identical or different, represent a hydrogen atom or an alkyl radical containing from 1 to 6 carbon atoms,
▪ n is an integer ranging from 1 to 20,
▪ p is an integer ranging from 1 to 20,
▪ # represents the point of attachment of T to G;
it being understood that said subunits T represent from 20 mol% to 45 mol% relative to the number of moles of subunits G constituting said polymer.

2. The membrane as claimed in claim 1, **characterized in that** the alkyl radicals mentioned for the radical R₁ of the subunit of formula (I_{G}) are chosen from methyl, ethyl, n-propyl, n-butyl and *t*-butyl radicals.

3. The membrane as claimed in claim 2, **characterized in that** the radical R₁ of the subunit of formula (I_{G}) is a *t*-butyl radical in the para position relative to Y.

4. The membrane as claimed in claim 1 or 2, **characterized in that** the subunit (I_{G}) is chosen from the subunits (I_{G1}) to (I_{G3}) below: 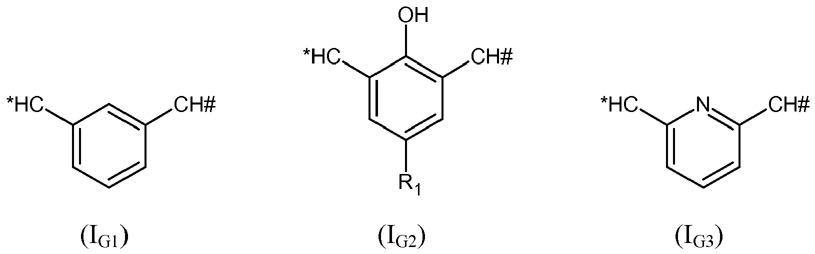 it being understood that in the subunit of formula (I_{G2}), the radical R₁ has the same meanings as those indicated in claim 1 or 2 for the subunit (I_{G}).

5. The membrane as claimed in claim 4, **characterized in that** in the subunit of formula (I_{G2}), the radical R₁ is a *t*-butyl radical.

6. The membrane as claimed in claim 4 or 5, **characterized in that** it is formed by a polymer formed from repeating units of formula (I) in which the subunit (I_{G}) is a subunit (I_{G2}) or (I_{G3}) that complexes at least one transition metal ion.

7. The membrane as claimed in claim 6, **characterized in that** the transition metal ion is chosen from Ag(I), Cu(I), Co(II), Fe(II) and Zn(II).

8. The membrane as claimed in any one of the preceding claims, **characterized in that** the subunit T is chosen from the subunits of formula (I_{T}) in which R₄ and R₅ are identical and represent a methyl radical.

9. The membrane as claimed in any one of the preceding claims, **characterized in that** the subunit T is a subunit of formula (I_{T}) in which the radicals R₃, R₄ and R₅ are identical and represent a methyl radical and n = p.

10. The membrane as claimed in any one of the preceding claims, **characterized in that** the subunits T represent from 30 mol% to 38 mol% relative to the number of moles of subunits G constituting said copolymer.

11. The membrane as claimed in claim 10, **characterized in that** the subunits T represent 34 mol% relative to the number of moles of subunits G constituting said copolymer.

12. The membrane as claimed in any one of the preceding claims, **characterized in that** it has a thickness ranging from 300 to 600 µm.

13. A process for preparing a self-supporting polymer membrane, formed by a dynamic polymer formed from repeating units of formula (I) as defined in any one of the preceding claims, **characterized in that** it comprises the following steps:
a) the preparation of a reaction mixture comprising, in solution in at least one organic solvent:
- at least one precursor of a subunit D chosen from the precursors of formula (I'_{D}) below: 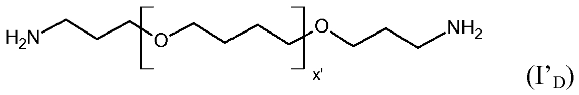 in which x' is an integer ranging from 10 to 20;
- at least one precursor of a subunit G chosen from the precursors of formula (I'_{G}) below: 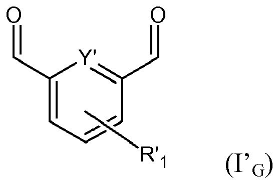 in which Y' represents a nitrogen atom or C-R'₂ with R'₂ = H or OH and R'₁ represents a hydrogen atom or an alkyl radical containing from 1 to 4 carbon atoms; and
- at least one precursor of a subunit T chosen from the precursors of formula (I'_{T}) below: 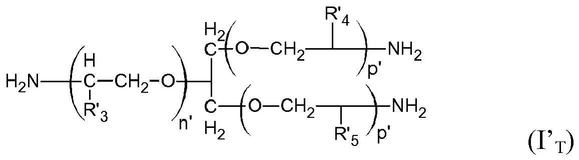 in which:
▪ R'₃ represents a hydrogen atom or an alkyl radical containing from 1 to 6 carbon atoms,
▪ R'₄ and R'₅, which may be identical or different, represent a hydrogen atom or an alkyl radical containing from 1 to 6 carbon atoms,
▪ n' is an integer ranging from 1 to 20,
▪ p' is an integer ranging from 1 to 20,
it being understood that within said reaction mixture, the amount of precursors of formula (I'_{T}) represents from 20 mol% to 45 mol% relative to the number of moles of precursors of formula (I'_{G}) present in said reaction mixture;
b) the polycondensation of said precursors by heating the reaction mixture to reflux to obtain a dynamic polymer formed from repeating units of formula (I);
c) the forming of the membrane and the evaporation of the organic solvent.

14. The process as claimed in claim 13, **characterized in that** the organic solvent of the reaction mixture is chosen from tetrahydrofuran, chloroform and dichloromethane, and mixtures thereof.

15. The process as claimed in claim 13 or 14, **characterized in that** the precursor of the subunits G is chosen from the precursors of formulae (I'_{G2}) and (I'_{G3}) below: 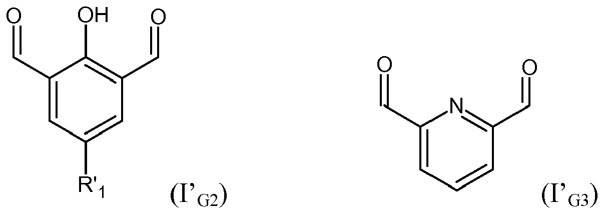 in which R'₁ has the same meaning as that indicated in claim 13 for the subunit (I'_{G}).

16. The process as claimed in claim 15, **characterized in that** the reaction mixture prepared in step a) also contains at least one transition metal salt.

17. The process as claimed in claim 16, **characterized in that** the transition metal salt is chosen from silver (Ag⁺), copper (Cu⁺), cobalt (Co²⁺), iron (Fe ²⁺) and zinc (Zn²⁺) salts in which the anion is an acetate, a trifluoromethanesulfonate, a tetrafluoroborate, a hexafluorophosphate, a nitrate or a perchlorate.

18. The use of a self-supporting membrane as defined in any one of claims 1 to 12, for the selective separation of chemical species.

19. The use as claimed in claim 18, for the selective separation of gaseous species contained in natural or industrial gases.

20. The use as claimed in claim 19, for the selective separation of carbon dioxide.

21. A process for separating out a chemical species, **characterized in that** it consists in passing a gaseous or liquid mixture containing the species that it is desired to separate out through a self-supporting polymer membrane as defined in any one of claims 1 to 12.

22. The use of a self-supporting membrane as defined in any one of claims 1 to 12, as a polymer electrolyte for solar cells and fuel cells.
